# FASCICULE DE BREVET EUROPEEN

(11) **EP 2 691 620 B1**
(45) Date de publication et mention de la délivrance du brevet: **01.03.2017**
(21) Numéro de dépôt: 12717397.9
(22) Date de dépôt: 28.03.2012
(51) Int. Cl.: F01N 3/20, B60K 15/035

(54) **DISPOSITIF POUR REMPLIR UN RESERVOIR DE VEHICULE AUTOMOBILE**
VORRICHTUNG ZUR TANKBEFÜLLUNG EINES KRAFTFAHRZEUGS
DEVICE FOR FILLING A TANK OF A MOTOR VEHICLE

(30) Priorité: 31.03.2011 FR 1152711
(43) Date de publication de la demande: 05.02.2014
(73) Titulaire: Renault S.A.S., 92100 Boulogne-Billancourt (FR)
(72) Inventeur: DOUTEAU-POIROUX, Damien, F-27810 Marcilly S/eure (FR); MARTEAU, Francis, F-78640 Neauphle Le Chateau (FR); NEZONDET, Aurélien, F-28210 Chaudon (FR)
(74) Mandataire: Rougemont, Bernard
(86) Numéro de dépôt international: PCT/FR2012/050645
(87) Numéro de publication internationale: WO 2012/131250

(56) Documents cités:
- EP-A2- 1 068 980
- FR-A5- 2 164 969
- US-A1- 2010 224 284

## Description

L'invention concerne un dispositif qui permet de remplir un réservoir de véhicule automobile. Plus particulièrement, l'invention porte sur un dispositif agencé pour fournir un liquide contenant de l'urée à un pot catalytique de véhicule automobile.

Généralement un tel dispositif comprend un réservoir destiné à contenir le liquide, comme par exemple celui décrit dans le document EP2131020. Conformément à l'usage courant dans ce domaine technique, le remplissage du réservoir est effectué par le dessus. Ce type de remplissage convient notamment lorsqu'on verse le liquide progressivement à partir d'un flacon, directement dans une ouverture pratiquée en partie haute du réservoir. L'air ou d'autres gaz contenus dans le réservoir au dessus du liquide, s'échappent alors par l'ouverture en longeant le filet de liquide versé à contre sens.

Ce mode de remplissage n'est pas approprié lorsque le réservoir n'est pas suffisamment accessible pour permettre un remplissage par versement de liquide, directement dans le réservoir. Ce mode de remplissage n'est également pas approprié à un remplissage rapide du réservoir pour lequel le filet de liquide versé ne laisse pas le passage nécessaire à travers l'ouverture pour permettre à l'air ou à d'autres gaz contenus dans le réservoir de s'échapper à contre courant.

L'invention a pour but d'utiliser une tubulure de remplissage qui comporte une extrémité inférieure pénétrant dans une partie inférieure du réservoir et une extrémité supérieure pour recevoir le liquide, permettant ainsi de remplir le réservoir à distance. La tubulure de remplissage par le bas du réservoir évite de créer un point faible qui résulterait par exemple d'un perçage de tôle.

On prévoit alors une canalisation de mise à l'air qui comporte une extrémité d'entrée pénétrant dans une partie supérieure du réservoir et une extrémité de sortie pénétrant dans la tubulure à proximité de l'extrémité supérieure de sorte que toute remontée intempestive de liquide par la canalisation de mise à l'air, est récupérée à proximité de l'extrémité de la tubulure prévue pour recevoir le liquide.

Un tel agencement pose cependant des problèmes lorsque des contraintes de construction imposent à la canalisation de mise à l'air de longer la tubulure de remplissage, notamment pour minimiser l'encombrement et la complexité de montage du dispositif, par exemple dans un véhicule automobile. Ce côtoiement de la canalisation avec la tubulure crée un siphon dans lequel le liquide a tendance à s'accumuler suite à un refoulement, à une condensation ou à d'autres phénomènes.

Des solutions ont déjà été recherchées dans le passé pour des réservoirs de carburant. Ainsi le document FR-A-2597034 propose d'introduire une soupape de type clapet anti-retour entre la partie basse de la canalisation et une partie inférieure du réservoir de sorte que le liquide peut passer de la canalisation vers le réservoir pour vider le siphon sans pouvoir passer en sens inverse.

Cependant les solutions connues posent d'autres problèmes. La complexité qui résulte du montage de la soupape, est un facteur d'augmentation de coût et de risque de panne lorsque par exemple, la soupape se bloque. D'autre part, la soupape est mal adaptée aux liquides de réduction catalytiques qui sont corrosifs.

En vue de remédier à ces problèmes, l'invention a pour objet un dispositif permettant de remplir un réservoir de véhicule automobile avec un liquide, au moyen d'une tubulure de remplissage et d'une canalisation de mise à l'air. La tubulure de remplissage comporte une extrémité inférieure pénétrant dans le réservoir et une extrémité supérieure pour recevoir le liquide de façon à remplir le réservoir.

Le document EP1068980 divulgue une canalisation de mise à l'air qui comporte une extrémité de sortie pénétrant dans la tubulure à proximité de l'extrémité supérieure et un tronçon bas situé à un niveau structurel inférieur à l'extrémité de sortie. Ce document divulgue un élément générateur de perte de charge qui fait communiquer le tronçon bas avec une portion de la tubulure située en dessous du tronçon bas.

La canalisation de mise à l'air de l'invention comporte une extrémité d'entrée pénétrant dans une partie supérieure du réservoir, une extrémité de sortie pénétrant dans la tubulure à proximité de l'extrémité supérieure et un tronçon bas situé à un premier niveau structurel inférieur aux extrémités d'entrée et de sortie. Le dispositif est remarquable en ce qu'il comprend un élément générateur de perte de charge fixe qui fait communiquer ledit tronçon bas avec une portion du réservoir située en dessous dudit tronçon bas.

Avantageusement, ledit élément générateur de perte de charge fixe comprend un matériau poreux.

Avantageusement aussi, ledit élément générateur de perte de charge fixe comprend une restriction géométrique.

Le dispositif est considérablement utile pour un réservoir de système de réduction catalytique sélective pour pot d'échappement.

Le dispositif est aussi considérablement utile lorsque ledit liquide de remplissage du réservoir comprend de l'urée.

L'invention sera mieux comprise à l'aide d'exemples de réalisation d'un dispositif conforme à l'invention en référence aux dessins annexés, dans lesquels :
- la figure 1 est une vue en coupe d'un dispositif conforme à l'invention ;
- la figure 2 est une vue en coupe d'un autre dispositif conforme à l'invention ;
- les figures 3 et 4 sont des vues en coupe d'élément générateur de perte de charge pour mettre en oeuvre l'invention.

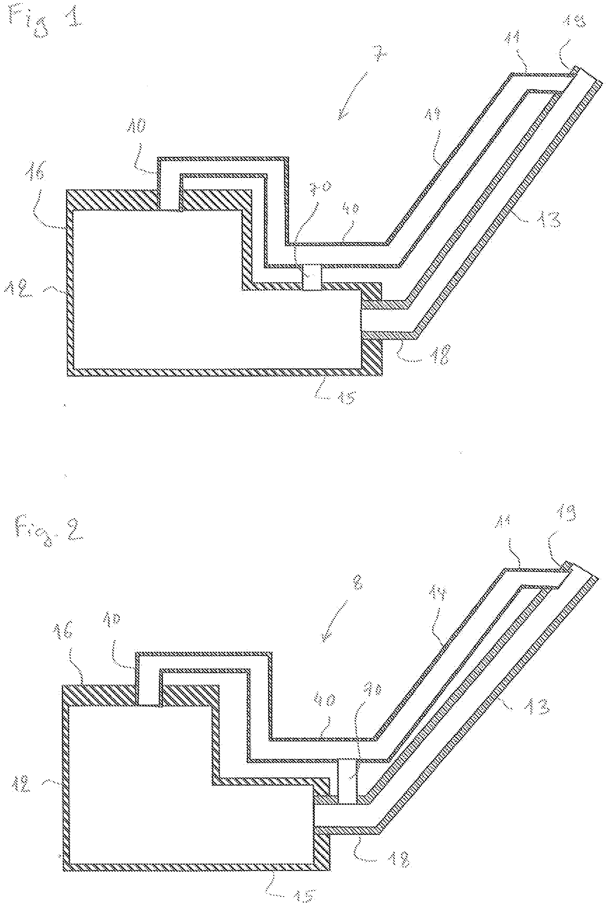

Les figures 1 et 2 montrent un dispositif 7 et un dispositif 8 pour remplir un réservoir 12 destiné à fournir un liquide à un organe de véhicule automobile (non représenté). L'organe de véhicule automobile est notamment un pot d'échappement.

Les dispositifs des figures 1 et 2 sont particulièrement utiles pour un pot d'échappement à réduction catalytique sélective (SCR, pour "Selective Catalytic Reduction" en Anglais).

Le réservoir 12 contient un agent réducteur des oxydes d'azote NOx émis par un moteur à combustion interne (non représenté) du véhicule. L'agent réducteur est par exemple un liquide comprenant une proportion de 30 à 35% d'urée diluée dans de l'eau déminéralisée. Une dose de liquide est généralement extraite du réservoir 12 pour être propulsée dans une canalisation d'alimentation jusqu'à un injecteur monté sur le pot d'échappement. La dose de liquide (NH₂-CO-NH₂) injectée permet de transformer une quantité prédéterminée de monoxyde et le dioxyde d'azote émis par le moteur, principalement en eau (H₂O) et en azote (N₂). Une capacité de vingt litres du réservoir 12 donne généralement au véhicule une autonomie de 20 000 Km en termes de lutte contre la pollution.

De façon à remplir le réservoir 12 après consommation de son contenu, une tubulure 13 de remplissage comporte une extrémité inférieure 18 pénétrant dans une partie inférieure 15 du réservoir 12 et une extrémité supérieure 19 pour recevoir le liquide, à partir d'un pistolet de pompe de station service ou d'un bidon.

De façon à évacuer les gaz, notamment l'air, qui surmontent le liquide pour permettre au niveau de monter dans le réservoir, le dispositif est équipé avec une canalisation 14 de mise à l'air qui comporte une extrémité d'entrée 10 pénétrant dans une partie supérieure 16 du réservoir 12 et une extrémité de sortie 11 pénétrant dans la tubulure 13 à proximité de l'extrémité supérieure 19. La remontée de la canalisation 14 en tête de la tubulure de remplissage, permet d'obtenir un déclenchement du pistolet de la station en cas de refoulement.

Les dispositifs 7, 8 constituent chacun un accessoire utile d'addition de liquide dans un organe de véhicule, notamment pour luter contre la pollution. Dans le but de perdre le moins possible de volume utile et d'intervenir le moins possible sur la structure, notamment la carrosserie, du véhicule, la canalisation 14 de mise à l'air chemine à proximité de la surface extérieure du réservoir 12 jusqu'au voisinage de l'extrémité inférieure 18 de la tubulure 13, puis le long de la tubulure 13 pour la rejoindre à proximité de son extrémité supérieure 19.

De la sorte, un passage unique dans la structure du véhicule, suffit à la fois pour la tubulure 13 de remplissage et pour la canalisation 14 de mise à l'air. De plus, la canalisation 14 ne vient pas traverser un espace du véhicule autre que celui occupé par le réservoir 12 et la tubulure 13, conservant ainsi au maximum le volume utile du véhicule.

L'avantage procuré par la géométrie de la canalisation 14 qui vient d'être décrite, en termes de minimisation d'impact sur la structure et sur le volume utile du véhicule, a cependant pour contre partie de nécessiter sur le parcours de la canalisation 14, un tronçon bas 40 au voisinage de l'extrémité inférieure 18 de la tubulure 13. La situation du tronçon bas 40 à un niveau structurel inférieur à ses extrémités d'entrée et de sortie 10, 11 a pour effet de créer un siphon dans lequel du liquide peut s'accumuler, par exemple en fin de remplissage du réservoir 12 après une remontée du liquide dans la canalisation 14.

Une présence de liquide dans le tronçon bas 40 a pour inconvénient de créer un barrage à l'évacuation des gaz lors d'un remplissage ultérieur. De plus, lorsque le dispositif 7 ou 8 est soumis au cours de son fonctionnement, à des températures descendant en dessous d'un seuil de congélation du liquide, la solidification du liquide dans le tronçon bas 40 risque de détériorer la canalisation 14. La solidification du liquide crée aussi un bouchon dur qui s'oppose à la circulation des gaz dans la canalisation 14. L'inconvénient est crucial lorsque le liquide contient de l'urée car la température de congélation de l'urée est de -11°C, température souvent atteinte dans les régions froides du globe.

Les dispositifs 7 et 8, à présent expliqués en référence aux figures 1 à 4 offrent l'avantage d'une solution simple et efficace qui repose sur un élément générateur de perte de charge fixe 70, 71, 72. L'élément générateur de perte de charge fait communiquer le tronçon bas 40 avec une cavité 73 située à un deuxième niveau structurel inférieur au premier niveau structurel précédemment mentionné.

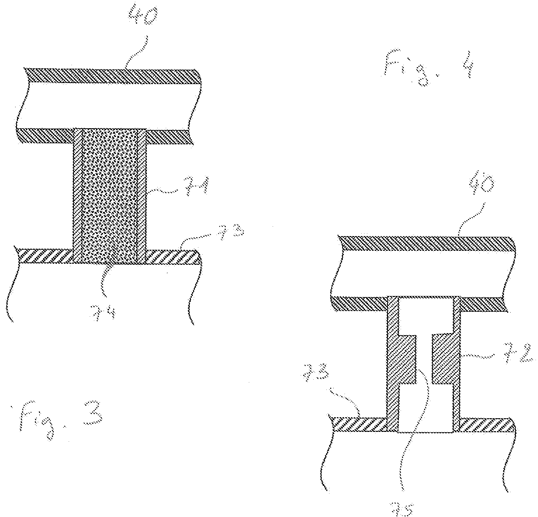

L'élément générateur de perte de charge 70 sur la figure 1, fait communiquer le tronçon bas 40 avec une portion 15 du réservoir 12 située en dessous du tronçon bas 40. La portion 15 du réservoir 12 constitue ici la cavité repérée 73 sur les figures 3 et 4.

L'élément générateur de perte de charge 70 sur la figure 2, fait communiquer le tronçon bas 40 avec une portion 18 de la tubulure 13 située en dessous du tronçon bas 40. La portion 18 de la tubulure 13 constitue ici la cavité repérée 73 sur les figures 3 et 4.

L'élément générateur de perte de charge fixe repéré 70 sur les figures 1 et 2, est représenté de manière plus détaillée sur les figures 3 et 4 où il est repéré 71 sur la figure 3 et 72 sur la figure 4.

En référence à la figure 3, l'élément générateur de perte de charge comprend un matériau poreux 74.

En référence à la figure 4, l'élément générateur de perte de charge comprend une restriction géométrique 75.

La perte de charge générée par le matériau poreux ou la restriction géométrique est fixe en ce qu'aucune pièce mobile telle qu'une soupape n'est mise en jeu et en ce qu'elle est déterminable de manière constante en fonction des dimensions géométriques (porosité et taille du matériau poreux, diamètre et longueur de la restriction).

Le dispositif 7 ou 8, passe de manière cyclique principalement par quatre états de fonctionnement habituel. Dans un premier état correspondant au réservoir 12 quasiment vide, le niveau liquide dans le réservoir 12 est situé en dessous du niveau structurel du tronçon bas 40. Dans un deuxième état correspondant au remplissage du réservoir 12, le niveau liquide dans le réservoir 12 monte progressivement au dessus du niveau structurel du tronçon bas 40 jusqu'à atteindre la partie haute 16. Dans l'état de remplissage du dispositif 7 ou 8, du liquide risque de s'accumuler dans le tronçon bas 40. Dans un troisième état correspondant au réservoir 12 quasiment plein, le niveau liquide dans le réservoir 12 est situé à proximité de l'extrémité d'entrée 10 de la canalisation 14 de mise à l'air. Dans un quatrième état correspondant au vidage du réservoir 12, le niveau liquide dans le réservoir 12 descend progressivement en dessous du niveau structurel du tronçon bas 40 jusqu'à retourner dans le premier état.

En phase de roulage, lorsque le niveau de liquide dans le réservoir est suffisamment bas pour que la partie de l'élément 70 coté cavité, en d'autres termes coté réservoir 12 ou coté tubulure 13 ne soit plus en contact avec du liquide dans le réservoir ou dans la tubulure 13, la dépression ainsi créée à la base de l'élément 70, provoque un écoulement du liquide contenu dans le tronçon bas 40 vers la cavité 73.

Le remplissage est donc possible principalement lorsque le niveau de liquide dans le réservoir 12 ou dans la tubulure 13 est suffisamment bas pour amorcer une vidange du siphon constitué par le tronçon bas 40. Ce niveau bas est utilement mis en cohérence avec un affichage sur le tableau de bord du véhicule. Par exemple, pour un liquide constituant un agent réducteur des émissions de gaz toxiques dans un pot d'échappement, la réglementation en matière de dépollution telle qu'elle est applicable aux véhicules homologués SCR, n'impose d'alerter le conducteur sur une nécessité de remplir le réservoir 12 qu'à partir d'une autonomie restante de 2400 km.

Une section capillaire des porosités 74 ou de la restriction 75, combinée à un faible niveau de pression dans la tubulure 13 de remplissage, ralentit considérablement en phase de remplissage du réservoir, le passage de liquide par l'élément 70 depuis le réservoir 12 vers la canalisation 14.

On dimensionne soit par des calculs, soit par des essais, soit par une combinaison de calculs et d'essais, les dimensions géométriques de l'élément 70, 71, 72 en fonction du débit de remplissage et de la forme du réservoir et du siphon, de façon à ce que la durée de remplissage du réservoir 12 soit strictement inférieure à la durée de remplissage du siphon constitué par le tronçon bas 40 lors de la remontée de liquide par l'élément 70. Ceci suffit à empêcher un remplissage de la canalisation 14 de mise à l'air par l'élément 70 avant la fin du remplissage.

Le matériau poreux est par exemple une mousse à alvéoles ouvertes ou un amoncellement de microbilles retenues par une crépine.

La restriction est par exemple unique ou constituée de plusieurs restrictions disposées en série ou en parallèle.

## Revendications

1. Dispositif (7, 8) pour remplir un réservoir (12) de véhicule automobile avec un liquide, comprenant :
- une tubulure (13) de remplissage qui comporte une extrémité inférieure (18) pénétrant dans le réservoir (12) et une extrémité supérieure (19) pour recevoir ledit liquide de façon à remplir le réservoir (12) ; et
- une canalisation (14) de mise à l'air qui comporte une extrémité d'entrée (10) pénétrant dans une partie supérieure (16) du réservoir (12), une extrémité de sortie (11) pénétrant dans la tubulure (13) à proximité de l'extrémité supérieure (19) et un tronçon bas (40) situé à un premier niveau structurel inférieur aux extrémités d'entrée et de sortie (10, 11) ;
**caractérisé en ce qu'**il comprend un élément générateur de perte de charge fixe (70, 71, 72) qui fait communiquer ledit tronçon bas (40) avec une portion (15) du réservoir (12) située en dessous dudit tronçon bas (40).

2. Dispositif (7, 8) selon la revendication 1, **caractérisé en ce que** ledit élément générateur de perte de charge fixe (70, 71) comprend un matériau poreux (74).

3. Dispositif (7, 8) selon la revendication 1, **caractérisé en ce que** ledit élément générateur de perte de charge fixe (70, 72) comprend une restriction géométrique (75).

4. Dispositif selon l'une des revendications précédentes, **caractérisé en ce que** ledit réservoir (12) est un réservoir de système de réduction catalytique sélective pour pot d'échappement.

5. Dispositif selon l'une des revendications précédentes, **caractérisé en ce que** ledit liquide de remplissage du réservoir (12) comprend de l'urée.

## Patentansprüche

1. Vorrichtung (7, 8) zum Befüllen eines Tanks (12) eines Kraftfahrzeugs mit einer Flüssigkeit, aufweisend:
- einen Einfüllstutzen (13), welcher ein in den Tank (12) eindringendes unteres Ende (18) und eine oberes Ende (19) aufweist, um die Flüssigkeit aufzunehmen, um dadurch den Tank (12) zu befüllen; und
- eine Entlüftungsleitung (14), welche ein in den oberen Teil (16) des Tanks (12) eindringendes Eintrittsende (10), ein in den Stutzen (13) in der Nähe des oberen Endes (19) eindringendes Austrittsende (11) und einen tiefer gelegenen Abschnitt (40) aufweist, welcher sich auf einem ersten strukturellen Niveau befindet, welches tiefer als das Eintrittsende und Austrittsende (10, 11) liegt;
**dadurch gekennzeichnet, dass** sie ein Element zur Erzeugung eines festen Druckverlustes (70, 71, 72) aufweist, welches den tiefer gelegenen Abschnitt (40) mit einem Teil (15) des Tanks (12) verbindet, welcher sich unterhalb des tiefer gelegenen Abschnitts (40) befindet.

2. Vorrichtung (7, 8) nach Anspruch 1, **dadurch gekennzeichnet, dass** das Element zur Erzeugung eines festen Druckverlustes (70, 71) ein poröses Material (74) aufweist.

3. Vorrichtung (7, 8) nach Anspruch 1, **dadurch gekennzeichnet, dass** das Element zur Erzeugung eines festen Druckverlustes (70, 72) eine geometrische Einengung (75) aufweist.

4. Vorrichtung nach einem der vorhergehenden Ansprüche, **dadurch gekennzeichnet, dass** der Tank (12) ein Tank eines Systems zur selektiven katalytischen Reduktion für einen Auspufftopf ist.

5. Vorrichtung nach einem der vorhergehenden Ansprüche, **dadurch gekennzeichnet, dass** die Flüssigkeit zum Befüllen des Tanks (12) Harnstoff aufweist.

## Claims

1. Device (7, 8) for filling a motor vehicle tank (12) with a liquid, comprising:
- a filling tube (13) which has a lower end (18) entering the tank (12) and an upper end (19) to take said liquid so as to fill the tank (12); and
- a vent duct (14) which comprises an inlet end (10) entering an upper part (16) of the tank (12), an outlet end (11) entering the tube (13) near the upper end (19) and a low section (40) situated at a first structural level below the level of the inlet and outlet ends (10, 11);
**characterized in that** it comprises a fixed pressure drop generating element (70, 71, 72) that causes said low section (40) to communicate with a portion (15) of the tank (12) which is situated underneath said low section (40).

2. Device (8) according to Claim 1, **characterized in that** said fixed pressure drop generating element (70, 71) comprises a porous material (74).

3. Device (7, 8) according to Claim 1, **characterized in that** said fixed pressure drop generating element (70, 72) comprises a geometric restriction (75).

4. Device according to one of the preceding claims, **characterized in that** said tank (12) is a selective catalytic reduction system tank for an exhaust system converter.

5. Device according to one of the preceding claims, **characterized in that** said liquid with which the tank (12) is filled contains urea.
